# EUROPÄISCHE PATENTSCHRIFT

(11) **EP 0 622 315 B1**
(45) Veröffentlichungstag und Bekanntmachung des Hinweises auf die Patenterteilung: **02.07.1997**
(21) Anmeldenummer: 94102944.9
(22) Anmeldetag: 26.02.1994
(51) Int. Cl.: B65G 25/10, B65G 47/82

(54) **Vorrichtung zum Transport von Produkten**
Device for handling products
Dispositif pour le transport de produits

(30) Priorität: 30.04.1993 DE 9306508 U
(43) Veröffentlichungstag der Anmeldung: 02.11.1994
(73) Patentinhaber: Paper Converting Machine GmbH, 67105 Schifferstadt (DE)
(72) Erfinder: Wald, Ulrich, D-67454 Hassloch (DE)
(74) Vertreter: Brommer, Hans Joachim, Dr.-Ing.

(56) Entgegenhaltungen:
- GB-A- 2 214 153
- GB-A- 2 250 497

## Beschreibung

Die Erfindung betrifft eine Vorrichtung gemäß dem Oberbegriff des Anspruchs 1 zum Transport von Produkten im Rahmen eines Verpackungsvorganges mit Hilfe von zwei gegenläufigen, hin und hergehenden und verschwenkbaren Abschiebern, die abwechselnd ein Produkt längs einer Bahn in der gewünschten Richtung verfahren, wobei der jeweils inaktive Abschieber in einer von der Bahn weggeschwenkten Passivstellung in die mit dem nächsten Produkt korrespondierende Ausgangsposition zurückfährt und dort wieder in die Aktivstellung verschwenkt wird.

Derartige Abschieber werden vor allem verwendet, um ein Produkt, worunter auch nebeneinander und/oder übereinander angeordnete Produktgruppen verstanden werden, in einen Verpackungsbeutel einzuschieben. Dabei ist es üblich, die Abschieber über Kurbelschwingen und Schwenkarme anzutreiben, damit sie einerseits die hin und hergehende Transportbewegung längs der Bahn durchführen, andererseits eine Schwenkbewegung senkrecht zur Bahn, damit sie nicht mit dem entgegenkommenden Schwenkarm zusammenstoßen. Aus Platzgründen sind die Kurbelschwingen und Schwenkarme beidseits der Bahn angeordnet, wobei sie aufgrund des vorgegebenen Transportweges für die Produkte nahezu die gesamte Seite der Transportvorrichtung überstreichen. Der apparative Aufwand für den Antrieb der Schwenkarme wird dadurch relativ hoch, die Zugänglichkeit zur Transportbahn erschwert und das Unfallrisiko für die Bedienungspersonen erhöht.

Außerdem ist es durch die GB-A-2 250 497 bekannt, einen Abschieber an zwei Führungsstangen verschiebbar zu lagern, wobei dieser Abschieber am Ende der Vorschubbewegung über eine Kulissenführung nach oben geschwenkt und sodann zurückgefahren wird. Am Ende der Rückfahrt wird der Abschieber durch die genannte Kulissenbahn wieder nach unten in die aktive Stellung zurückgeschwenkt, worauf seine Vorschubbewegung beginnt.

Schließlich ist es durch die GB-A-2 214 153 bekannt, mit zwei seitlich einer Förderbahn angeordneten Ketten zu arbeiten, an denen jeweils eine Vielzahl von Abschiebern gelagert sind. Diese Abschieber sind parallel zur Förderbahn verschwenkbar zwischen einer in die Förderbahn hineinragenden Position einerseits und einer parallel zur Förderrichtung verlaufenden Randposition andererseits. Die beiden Ketten werden abwechselnd in Förderrichtung und zurückbewegt, wobei der Rücklauf schneller als der Vorlauf erfolgt. Ihr Antrieb erfolgt hydraulisch oder elektrisch mit unterschiedlichen Übersetzungen für Vorlauf und Rücklauf.

Hiervon ausgehend liegt der vorliegenden Erfindung die Aufgabe zugrunde, die eingangs beschriebene Transportvorrichtung dahingehend zu verbessern, daß sie sich durch kompakten, kostengünstigen Aufbau auszeichnet. Darüber hinaus soll auch die Unfallgefahr verringert werden.

Diese Aufgabe wird erfindungsgemäß durch die Merkmale des Anspruches 1 gelöst.

Hierdurch ergibt sich der Vorteil, daß die langen und schweren Kurbelschwingen und Schwenkarme entfallen und der Antrieb nur noch aus ortsfesten Führungsstangen und einem oder zwei hin und hergehenden Zugmitteln, insbesondere Riemen, besteht. Die bewegten Massen sind erheblich geringer und der Antrieb entsprechend einfacher, kompakter und kostengünstiger. Der Servomotor mit programmierbarem Geschwindigkeitsprofil ermöglicht ein sanftes Anfahren und Verzögern, also eine schonende Behandlung der Produkte, bei denen es sich häufig um weiche Hygienepapiererzeugnisse handelt. Insbesondere können die Beschleunigungs- und Verzögerungsabläufe als Sinusquadratkurven ausgelegt werden, wodurch auch der Momenten-Verlauf des Antriebes optimiert werden kann.

Grundsätzlich können beide Abschieber vom gleichen Riemen angetrieben werden, indem ein über zwei Umlenkräder umlaufender, endloser Zahnriemen verwendet wird, mit dessen Obertrum der eine Abschieber und mit dessen Untertrum der andere Abschieber verbunden ist. Meist ist es aber günstiger, jedem Abschieber einen eigenen Zahnriemen zuzuordnen und beide Zahnriemen an einem gemeinsamen Antrieb anzuschließen. Statt eines endlosen Riemens wird zweckmäßig ein Riemen verwendet, dessen Enden in einem Verbindungselement mit Spannpratzen festgelegt sind. Dadurch ist die Riemenspannung über das Verbindungselement einstellbar, ohne daß man die Abstände der Umlenkachsen verändern muß.

Zur weiteren Verringerung der Unfallgefahr empfiehlt es sich, die Verbindung zwischen Abschieber und Riemen über eine Überlastkupplung laufen zu lassen, die mechanisch ausrastet und nur in einer Position innerhalb des gesamten Transportweges wieder eingerastet werden kann. Damit ist sichergestellt, daß der Schieber immer synchron zum Hauptantrieb eingerastet wird.

Damit die Abschieber am Ende des Transportweges in ihre inaktive Stellung wegschwenken und nach dem Zurückfahren wieder in die Aktivstellung zum Hintergreifen des nächsten Produktes verschwenkt werden, sind zwei höhenversetzte Führungsbahnen vorgesehen, die sich über die Länge des Transportweges erstrecken und an ihren Enden eine verstellbare Weiche aufweisen. Diese Weiche gestattet es, einen mit dem Abschieber verbundenen Kulissenstein von der unteren in die obere Führungsbahn und umgekehrt umzuleiten und dadurch die Schwenkbewegung des Abschiebers zu erzeugen.

Weitere Merkmale und Vorteile der Erfindung ergeben sich aus der nachfolgenden Beschreibung eines Ausführungsbeispieles anhand der Zeichnung; dabei zeigt
- Figur 1: eine Seitenansicht der Gesamtanlage;
- Figur 2: ein schematisches Prinzipbild des Abschieberantriebes in der Seitenansicht;
- Figur 3: das gleiche Prinzipbild in einer Ansicht von oben und
- Figur 4: einen vergrößerten Ausschnitt der Führungsbahn für die Schwenkbewegung des Abschiebers.

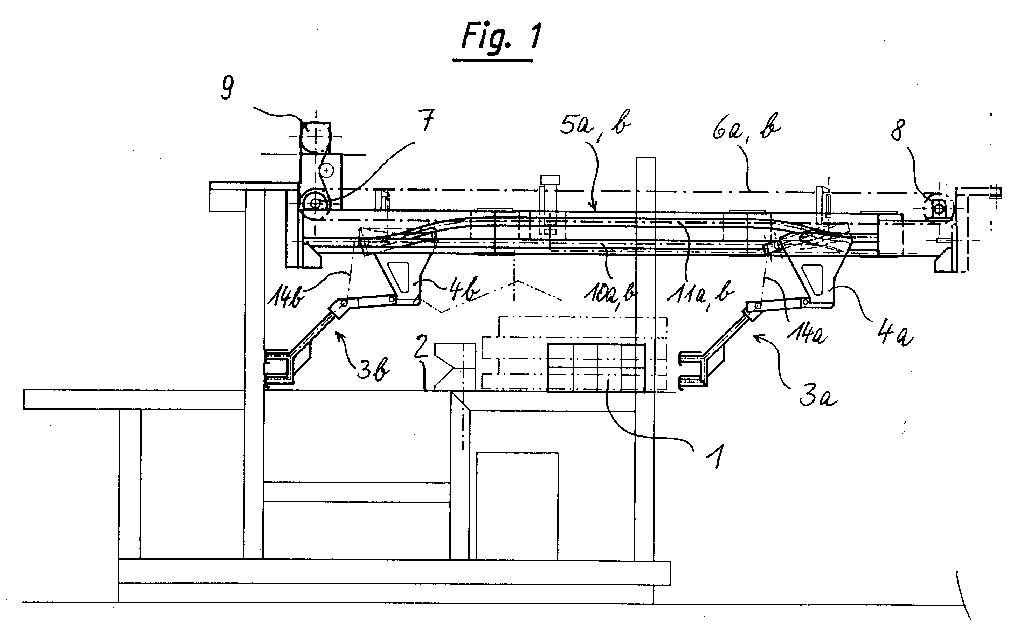

Gemäß Figur 1 werden die zu verpackenden Produkte 1 in nicht näher dargestellter Weise auf einer Bahn 2 in der gezeichneten Position bereitgestellt. Von dort sollen sie mit Hilfe der nachfolgend näher beschriebenen Abschieber 3a und 3b nach links transportiert und in einen nicht dargestellten vorgefertigten Beutel aus Folie oder Papier hineingeschoben werden.

Die Abschieber 3a und 3b sind jeweils nach oben schwenkbar an einem Schlitten 4a bzw. 4b gelagert. Diese Schlitten sind ihrerseits horizontal längs jeweils einer Führung 5a bzw. 5b verfahrbar. Ihr Antrieb erfolgt durch jeweils ein flexibles Zugmittel in Form eines Zahnriemens 6a bzw. 6b, der über endständige Umlenkräder 7, 8 verläuft und von einem Servomotor 9 gesteuert eine hin und hergehende Bewegung durchführt. Die Führungen 5a bzw. 5b sind beidseits oberhalb der Bahn 2 angeordnet; gleiches gilt für die genannten Zahnriemen.

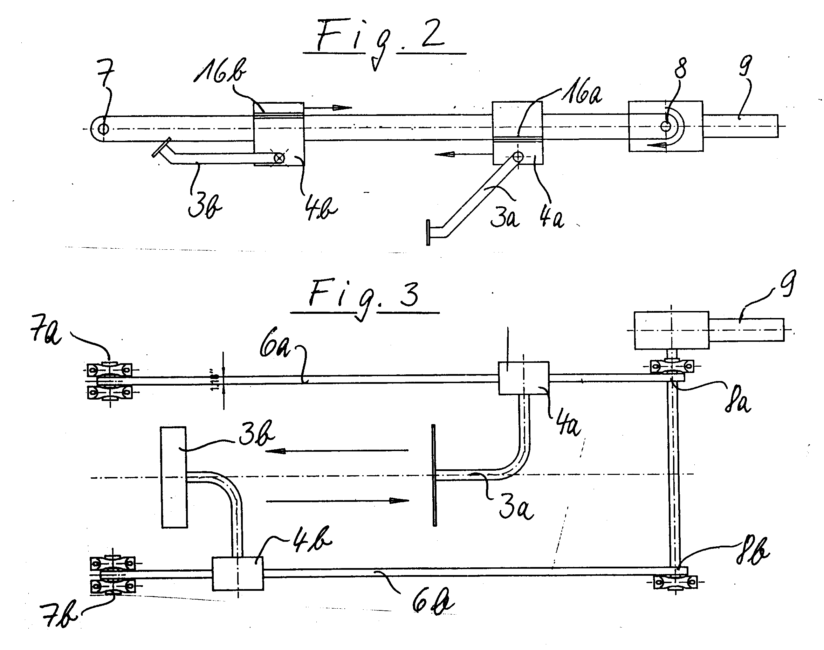

Die Einzelheiten des Antriebes gehen aus Figur 2 und 3 hervor, wobei es sich um Prinzipdarstellungen handelt, die im Detail nicht mit Figur 1 übereinzustimmen brauchen. Wie aus diesen Darstellungen hervorgeht, sind beiderseits oberhalb der Bahn, auf der die Produkte transportiert werden, die beiden endlosen Zahnriemen 6a und 6b mit ihren Umlenkrädern 7a, 8a bzw. 7b, 8b angeordnet. Dabei ist der Zahnriemen 6a an seinem Untertrum mit dem Schlitten 4a, der Zahnriemen 6b an seinem Obertrum mit dem Schlitten 4b verbunden. Beide Zahnriemen führen eine hin und hergehende Bewegung mit vorgegebenem Geschwindigkeitsprofil durch, in deren Verlauf die Abschieber 3a und 3b jeweils abwechselnd ein Produkt von rechts nach links befördern und sodann wieder in die Ausgangsstellung zurückkehren.

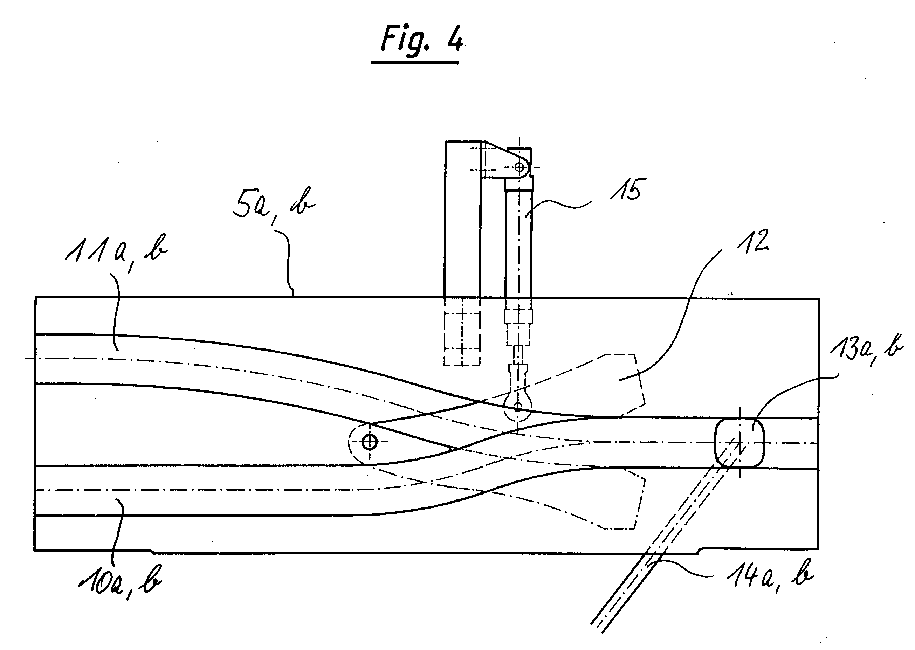

Da sich die Abschieber von den seitlich angeordneten Schlitten 4a und 4b nach innen über die Produktbahn erstrecken, muß zur Vermeidung von Kollisionen dafür gesorgt werden, daß der jeweils zurückfahrende Abschieber - im Ausführungsbeispiel also der Abschieber 3b aus dem Produktbereich heraus nach oben geschwenkt wird, wie in Figur 2 und 3 dargestellt. Die Erzeugung dieser Schwenkbewegung wird anhand der Figuren 1 und 4 erläutert. Man erkennt, daß in jeder Führung 5a und 5b eine untere Führungsbahn 10a bzw. 10b und eine obere Führungsbahn 11a bzw. 11b angeordnet ist. Die obere und die untere Führungsbahn laufen jeweils an ihren Enden zusammen, wobei im Kreuzungsbereich eine verstellbare Weiche 12 angeordnet ist.

In den Bahnkurven 10a und 11a bzw. 10b und 11b läuft ein Kulissenstein 13a bzw. 13b, der schwenkbar mit dem Schlitten 4a bzw. 4b verbunden ist und dessen Verfahrbewegung mitmacht. Außerdem trägt jeder Kulissenstein einen Hebel 14a bzw. 14b, der an den Abschieber 3a bzw. 3b angelenkt ist und dessen Höhenverschwenkung bewirkt. Die Funktion ist folgende: Wenn der Kulissenstein 13a in der in Figur 4 gezeigten Position steht, so wird die Weiche 12 mit Hilfe eines Betätigungselementes 15 in der gezeichneten oberen Position gehalten, so daß der Kulissenstein 13a zu Beginn seiner Transportbewegung in die untere Führungsbahn 10a gelenkt wird. Dementsprechend schwenkt der Abschieber 3a in die untere Aktivposition, erfaßt also das Produkt 1 und vermag es nach links in den Beutel zu schieben. Am linken Ende der Bahnkurven 10 und 11 ist eine gleichartige Weiche angeordnet, die den Kulissenstein 13a beim Rückhub in die obere Bahnkurve 11a lenkt. Dadurch wird der Abschieber hochgeschwenkt, erreicht also die in Figur 2 und 3 für den Abschieber 3b dargestellte Position und kann oberhalb des entgegenkommenden anderen Abschiebers in die Ausgangsstellung zurückfahren. Dort verfährt er bei nach unten geschwenkter Weiche 12 zunächst in die Zwischenposition, wie sie durch den gezeichneten Kulissenstein 13a in Figur 4 repräsentiert wird. Anschließend schnappt die Weiche 12 in die obere Position und der Vorgang wiederholt sich.

Schließlich ist in Figur 2 noch ein vorteilhaftes Merkmal der Erfindung dargestellt, nämlich eine Überlastkupplung 16a bzw. 16b, die zwischen dem Schlitten 4a bzw. 4b einerseits und dem Untertrum bzw. Obertrum des Zahnriemens andererseits eingebaut ist. Sie löst die Verbindung zwischen den genannten Teilen, wenn am Abschieber ein unzulässig hoher Bewegungswiderstand auftritt, insbesondere also, wenn er gegen ein Hindernis fährt und ist bar in einer Synchronposition wieder einrastbar.

## Patentansprüche

1. Vorrichtung zum Transport von Produkten im Rahmen eines Verpackungsvorganges mit Hilfe von zwei gegenläufigen, hin- und hergehenden und verschwenkbaren Abschiebern (3a, 3b), die abwechselnd ein Produkt (1) längs einer Bahn (2) in der gewünschten Richtung verfahren, wobei der jeweils inaktive Abschieber in einer von der Bahn (2) nach oben weggeschwenkten Passivstellung in die mit dem nächsten Produkt korrespondierende Ausgangsposition zurückfährt und wieder in die Aktivstellung verschwenkt wird,
dadurch gekennzeichnet,
daß die Abschieber (3a, 3b) an zumindest einer Führungsstange (5a, 5b) in Transportrichtung verfahrbar gelagert sind und ihr Antrieb durch zumindest ein umlaufendes Zugmittel, insbesondere einen Riemen (6a, 6b) erfolgt, der abwechselnd vor- und zurückfährt, wobei der Antrieb des Zugmittels (6a, 6b) durch einen Servomotor (9) mit programmierbarem Geschwindigkeitsprofil erfolgt.

2. Vorrichtung nach Anspruch 1,
dadurch gekennzeichnet,
daß das Zugmittel (6a, 6b) über Umlenkrollen (7, 8) umläuft und daß mit dem Obertrum des Zugmittels der eine Abschieber (3b), mit dem Untertrum der andere Abschieber (3a) verbunden ist.

3. Vorrichtung nach Anspruch 1,
dadurch gekennzeichnet,
daß je ein Zugmittel (6a, 6b) beidseits oberhalb der Produktbahn (2) angeordnet und jedem Abschieber (3a, 3b) ein eigenes Zugmittel (6a, 6b) zugeordnet ist und daß beide Zugmittel an einen gemeinsamen Antrieb (9) angeschlossen sind.

4. Vorrichtung nach Anspruch 1,
dadurch gekennzeichnet,
daß die Verbindung zwischen Abschieber (3a, 3b) und Zugmittel (6a, 6b) über eine Überlastkupplung (16a, 16b) erfolgt, die in nur einer Synchronposition wieder einrastbar ist.

5. Vorrichtung nach Anspruch 1,
dadurch gekennzeichnet,
daß die Enden des Zugmittels verstellbar in einem gemeinsamen Verbindungselement zusammengeführt sind.

6. Vorrichtung nach Anspruch 1,
dadurch gekennzeichnet,
daß das Zugmittel ein Zahnriemen ist.

7. Vorrichtung nach Anspruch 1,
dadurch gekennzeichnet,
daß sie für jeden Abschieber (3a, 3b) zwei höhenversetzte Führungsbahnen (10a, 10b; 11a, 11b) für die Erzeugung der Schwenkbewegung aufweist, die an ihren Enden durch eine Weiche (12) verbunden sind und in denen ein mit dem Abschieber verbundener Kulissenstein (13a, 13b) gleitet.

## Claims

1. Apparatus for transporting products in the context of a packaging process with the aid of two pushers (3a, 3b) which work in opposite directions, move back and forth and are able to which pushers alternately move a product (1) in the desired direction along a track (2), the pusher that is inactive being returned in a passive position in which it is pivoted upwards away from the track (2) to the starting position which corresponds to the next product and being pivoted into the active position again, characterised in that the pushers (3a, 3b) are mounted to be movable in the transport direction along at least one guide rod (5a, 5b) and their drive means is provided by at least one circulating traction means, especially a belt (6a, 6b), which moves alternately backwards and forwards, the traction means (6a, 6b) being driven by a servo motor (9) having a programmable speed profile.

2. Apparatus according to claim 1, characterised in that the traction means (6a, 6b) circulates around pulleys (7, 8), and one pusher (3b) is connected to the upper run of the traction means and the other pusher (3a) is connected to the lower run.

3. Apparatus according to claim 1, characterised in that a traction means (6a, 6b) is arranged on both sides above the product track (2) and each pusher (3a, 3b) is assigned its own traction means (6a, 6b) and the two traction means are connected to a common drive means (9).

4. Apparatus according to claim 1, characterised in that the connection between pusher (3a, 3b) and traction means (6a, 6b) is made *via* an overload coupling (16a, 16b) which can be re-engaged in only one synchronous position.

5. Apparatus according to claim 1, characterised in that the ends of the traction means are brought together adjustably in a common connection element.

6. Apparatus according to claim 1, characterised in that the traction means is a toothed belt.

7. Apparatus according to claim 1, characterised in that it has for each pusher (3a, 3b) two guide tracks (10a, 10b; 11a, 11b) at different heights for producing the pivoting movement, which guide tracks are connected at their ends by a switchover (12) and in which guide tracks a sliding block (13a, 13b), connected to the pusher, slides.

## Revendications

1. Dispositif pour le transport de produits dans le cadre d'un procédé d'emballage, à l'aide de deux pousseuses (3a, 3b) orientables, fonctionnant par mouvements opposés de va-et-vient qui, en alternance, déplacent un produit (1) le long d'une glissière (2) dans la direction désirée, la pousseuse respectivement inactive, en position passive et orientée vers le haut par rapport à la glissière (2), revenant en position initiale coïncidant avec le produit suivant et étant à nouveau orientée en position active, **caractérisé** en ce que les pousseuses (3a, 3b) sont disposées au moins sur une tige conductrice (5a, 5b) de façon déplaçable dans le sens de transport et que leur commande est effectuée à l'aide d'au moins un mécanisme de traction rotatif, en particulier d'une courroie (6a, 6b) qui en alternance avance et recule, la commande du mécanisme de traction (6a, 6b) étant réalisée par un servomoteur (9) à profil de vitesse programmable.

2. Dispositif selon la revendication 1, **caractérisé** en ce que le mécanisme de traction (6a, 6b) circule sur des poulies de guidage (7, 8) et que l'une des pousseuses (3b) est reliée au brin supérieur du mécanisme de traction, l'autre pousseuse (3a) au brin inférieur.

3. Dispositif selon la revendication 1, **caractérisé** en ce qu'un mécanisme de traction (6a, 6b) est installé respectivement de part et d'autre au-dessus de la glissière à produits (2) et que chaque pousseuse (3a, 3b) est dotée de son propre mécanisme de traction (6a, 6b) et que les deux mécanismes de traction sont reliés à un dispositif de commande commun (9).

4. Dispositif selon la revendication 1, **caractérisé** en ce que la liaison entre les pousseuses (3a, 3b) et le mécanisme de traction (6a, 6b) est réalisée au moyen d'un accouplement de surcharge (16 a, 16b) qui ne peut être réenclenché que dans une position synchrone.

5. Dispositif selon la revendication 1, **caractérisé** en ce que les extrémités du mécanisme de traction sont combinées de façon réglable dans un élément de liaison commun.

6. Dispositif selon la revendication 1, **caractérisé** en ce que le mécanisme de traction est une courroie dentée.

7. Dispositif selon la revendication 1, **caractérisé** en ce qu'il présente pour chaque pousseuse (3a, 3b) deux glissières de guidage (10a, 10b; 11a, 11b) à hauteurs intercalées pour réaliser le mouvement de pivotement, qui sont reliées à leurs extrémités par un branchement (12) et dans lesquelles glisse un coulisseau (13a, 13b) relié à la pousseuse.
